Europäisches Patentamt

European Patent Office

Office européen des brevets

(11) Publication number: **0 327 256**
**A2**

# EUROPEAN PATENT APPLICATION

(21) Application number: 89300753.4

(22) Date of filing: 26.01.89

(51) Int. Cl.4: **B29C 65/02** , **B29C 65/10** , **B29C 65/74** , **B65B 13/32**

(30) Priority: 05.02.88 US 152744

(43) Date of publication of application:
09.08.89 Bulletin 89/32

(84) Designated Contracting States:
AT BE CH DE ES FR GB GR IT LI LU NL SE

(71) Applicant: SIGNODE CORPORATION
3650 West Lake Avenue
Glenview Illinois 60025(US)

(72) Inventor: Abrams, Jack S.
1942 Redwood Lane
Northbrook Illinois 60062(US)

(74) Representative: Rackham, Stephen Neil et al
GILL JENNINGS & EVERY 53-64 Chancery
Lane
London WC2A 1HN(GB)

(54) **Welding thermoplastics material.**

(57) A method of welding at least two layers (18, 20) of thermoplastic material, e.g. polyethylene terephthalate or polyporopylene, and a weld (30) so produced comprises directing a jet of hot gas from a nozzle (10), through a hole (16) in an inlet mask (16), and against the layers (18, 20). The layers (18, 20) are backed by an outlet mask (22) having a hole (26) and serving as a heat sink. The inlet mask (16), the layers (18, 20), and the outlet mask (22) are clamped together. A transverse weld (30) is formed entirely of the material of the layers (18, 20). The weld (30) has a columnar shape with an enlarged end (32), which is cold-headed. The opposite end of the weld is level with or depressed with respect to marginal surfaces of the adjacent layer (18, 20). If the material is crystallizable, the weld may be more crystalline than other portions of the layers.

FIG_3_

## Welding Thermoplastics Material

This invention pertains to welding of thermoplastic films and sheets, as exemplified by oriented plastic strapping. This invention is useful as well for welding of lids onto containers and welding of a wide range of other products made from such films and sheets.

Typically, oriented plastics strapping is made from polypropylene or polyethylene terephthalate which is a crystallizable polyester known commonly as "PET". Such strapping has found widespread use in many packaging applications. These range from light-duty applications, such as bundling of small stacks of envelopes, to heavy-duty applications, such as baling of compressed fibers. Such strapping is beginning to also be used in such newer, heavy-duty applications as in snow fencing and in geogrids, which are used to stabilize roadways and earthworks.

Although plastic strapping is commercially available which exhibits high tensile strength and low elongation, its usefulness in heavy-duty applications is limited largely by the shortcomings of whatever means are used to join overlapping ends of a length of such strapping, as in bundling applications, or to join crossed pieces of such strapping at a node, as in geogrid fabrication.

When plastic strapping first came into commercial use for bundling applications, metal seals were used, essentially as metal seals had been used with steel strapping. Since plastic strapping is notch-sensitive and metal seals tend to cut notches in the strapping with which they are used, such seals are not entirely satisfactory for plastic strapping, particularly in heavy-duty applications. Use of such seals with plastic strapping in many applications has been largely supplanted by various welding techniques.

Earlier welding techniques employed heated blades to fuse localized regions of overlapping ends of plastic straps. Later welding techniques, which have supplanted those earlier techniques for many applications, employed vibratory devices to impart rapid movement and frictional contact between localized regions of the strapping being welded. A very large number of strapping machines and portable strapping tools in current use employ such earlier or later welding techniques.

By a welding technique of either type noted above, a generally planar weld is formed. Such a weld tends to fail, not by breaking of the strapping material away from the weld, but by peeling or delamination when subjected to tensile stresses well below the breaking strength of the base strapping material. Although such techniques may be yet improved, joint strengths exceeding fifty to sixty percent of the breaking strength of the base strapping material are difficult to achieve by conventional strap welding techniques.

This invention addresses a long-felt need for an improved welding technique enabling joint strengths retaining a substantial fraction of the breaking strength of the base thermoplastic material to be readily and repeatably achieved. This invention offers significant advantages when used in applications of oriented plastic strapping.

Likewise, this invention promises to have a wide range of other important uses. One potential use is to join lids onto containers, in a tamper-resistant manner, for packaging of foods, drugs, and medical instruments. Another such use is to weld thermoplastic films. This invention may be also used to seal folded cartons, envelopes, or other packages, such as folded envelopes for computer diskettes.

Herein, all references to sheets of thermoplastic materials are intended to refer to sheet-form materials having thicknesses of approximately 10 mils (25 $\mu$m) or more, in contrast with thinner films.

According to a first aspect of this invention an article of manufacture comprising at least two layers of thermoplastic material welded to one another, is characterised by at least one transverse weld being formed entirely of the material of the layers extending substantially through each of the layers, and having a columnar shape with an enlarged head at one end, the other end of the weld being substantially level with an adjacent surface of one of the layers.

According to a second aspect of this invention a strap of thermoplastic material having its ends overlapped to form a joint in which the ends are welded to each other is characterised by at least one transverse weld being formed entirely of the material of the strap, extending substantially through each of the ends and having a columnar shape with an enlarged head at one end, the other end of the weld being substantially level with an adjacent surface of one of the ends.

According to a third aspect of this invention a method of welding at least two layers of thermoplastic material to one another comprises the steps of clamping an inlet mask having a hole, the layers and an outlet mask having a hole in intimate contact with one another, with the holes in the inlet and outlet masks aligned, and passing a jet of hot gas, for a limited time, successively through the hole in the inlet mask, the layers and the hole in the outlet mask, the outlet mask dissipating heat rapidly so as to enable a transverse weld to form which welds the layers to one another.

This invention also provides an improved method for welding of a lid and a container to each other, for packaging of foods, drugs, or medical instruments, or for welding of any other arrangement of two or more films or sheets of thermoplastic material in contiguous relation to one another.

By the improved method of this invention, a transverse weld is formed with a unique shape, which is far less prone to fail by peeling or delamination, in contrast with a generally planar weld produced with a conventional strap welding technique.

Preferably, the weld is cold-headed, so as to lie flattened against the outer surface of the adjacent sheet. The outer end of the weld is level with or depressed slightly with respect to the outer surface of the adjacent layer.

If the material of the sheets is generally amorphous but crystallizable, the weld may be more crystalline than the generally amorphous material away from the weld. The breaking strength of the weld is enhanced by its being more crystalline. The enhanced breaking strength of the weld is particularly advantageous with oriented thermoplastic strapping.

An array of such welds may produce a joint having a breaking strength retaining a substantial fraction of the breaking strength of the base material, as well as being far less prone to fail by peeling or delamination, in contrast with a generally planar weld. The breaking strength of each weld may approach the breaking strength of the base material. Such a joint is particularly advantageous in heavy-duty applications of oriented thermoplastic strapping.

A particular example of a method and a weld in accordance with this invention will now be described with reference to the accompanying drawings; in which:-

Figure 1 is a fragmetnary, axial cross-section at an initial stage before a transverse weld has begun to form;

Figure 2 is a fragmentary, axial cross-section after a transverse weld has formed but before the weld has been cold-headed;

Figure 3 is a fragmentary, axial cross-section at a later stage after the weld has been cold-headed; and,

Figure 4 is a fragmentary cross-section of the welded sheet and the finished weld.

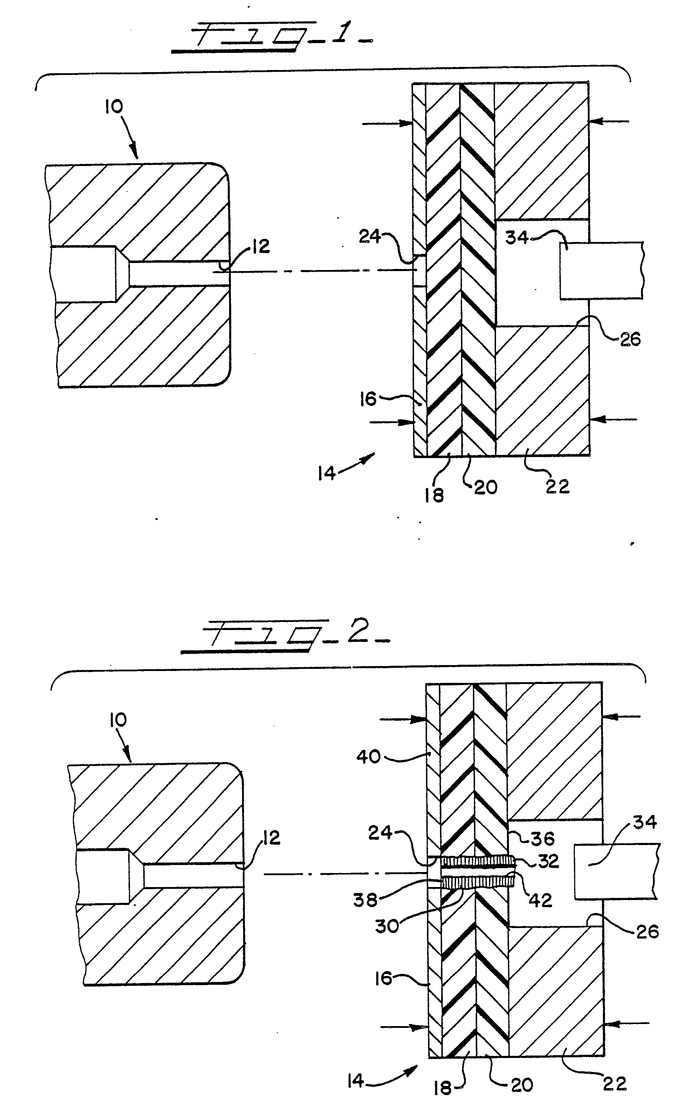

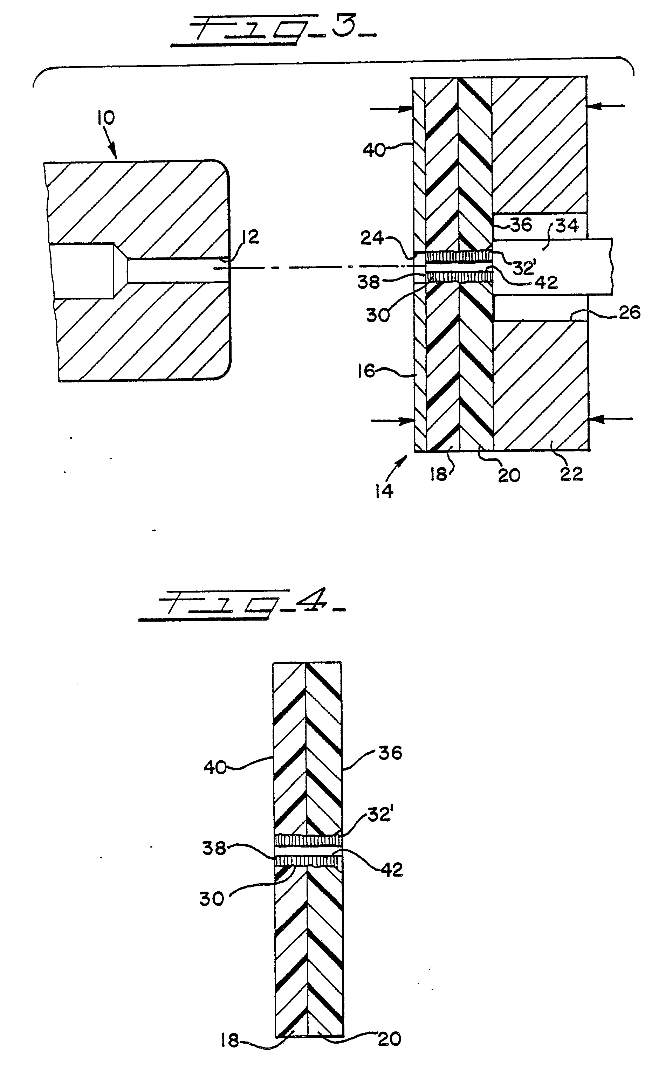

The improved method of this invention can be effectively practised with minimal apparatus, as shown in Figures 1 through 3.

A nozzle 10 having an axial bore 12 is connected to a source (not shown) of air, which is heated to a high temperature, and is arranged to deliver the air for a limited time at a high rate of flow. The air temperature should be suitably high to fuse the material being welded but not to vaporize such material. As an example, a temperature of 740° F (393° C) is suitable to fuse but not vaporize polypropylene. Preferably, the nozzle 10 is made from stainless steel tubing. For welding of two layers of thermoplastic strapping, as discussed above, the bore 12 can have a diameter of approximately 0.015 inch (0.38 mm).

As arranged in a stack 14, an inlet mask 16, a first layer or sheet 18 of thermoplastic material, a second layer or sheet 20 of thermoplastic material, and an outlet mask 22 are clamped together (as indicated by arrows) for intimate contact therebetween (i.e. between the inlet mask 14 and the first sheet 18, between the first sheet 18 and the second sheet 20, and between the second sheet 20 and the outlet mask 22). Although no minimum clamping pressure is required, it is important to provide intimate contact therebetween, so as to prevent diversion of hot air therebetween which could prevent an acceptable weld from forming. Any suitable clamping means (not shown) may be so used.

The inlet mask 16, which controls where hot air impinges on the sheets, has a circular hole 24, which is aligned axially with the bore 12 of the nozzle 10. Preferably, the inlet mask 16 is made from a stainless steel sheet. For welding of two. layers of thermoplastic strapping, as discussed above, the inlet mask 16 can have a thickness of approximately 0.008 inch (0.2 mm) with the hole 24 having a diameter of approximately 0.015 inch (0.38 mm).

The outlet mask 22 has a circular hole 26, which is aligned axially with the bore 12 of the nozzle 10 and therefore with the hole 24 in the inlet mask 22. Preferably, the outlet mask 22 is made from a stainless steel plate. For welding of two layers of thermoplastic strapping, as discussed above, the outlet mask 22 can have a minimum thickness of approximately 0.062 inch (1.56 mm) with the hole 26 having a diameter of approximately 0.125 inch (3.1 mm). The outlet mask 22 must have a large mass so as to serve as a heat sink for purposes described below.

The nozzle 10 is displaced from the inlet mask 16 by a suitable distance, which for an inlet mask having the dimensions indicated above, may be approximately from 0.062 (1.56 mm) to 0.25 inch (6.3 mm). Too great a distance tends to allow the air to cool excessively. Too small a distance tends to allow the air to impinge with too much force.

Flow of hot air from the nozzle 10 is controlled by a suitable valve or other means (not shown) so as to enable the air to pass through the hole 24 in the inlet mask 16 only for a limited time.

When hot air from the nozzle 10 passes through the hole 24 in the inlet mask 16 so as to impinge against the sheet 18, the sheets 18, 20, begin to fuse in localized regions. The air blows a small amount of the material of the sheets 18, 20, in a liquid state, through the hole 26 in the outlet mask 22. No vaporized material is produced. Since the air flows only for a limited time, as explained above, the outlet mask 22 acting as a heat sink dissipates heat rapidly so as to enable a transverse weld 30 having a unique shape to form. As no filler is used, the weld 30 forms entirely of the material of the sheets 18, 20.

As shown in axial cross-section in the drawings, the weld 30 forms with a columnar shape having rotational symmetry and extends substantially through each of the sheets 18, 20, as contrasted with a generally planar weld. Initially, the weld 30 has a raised end 32, which extends from the second sheet 20 into the hole 26 in the outlet mask 16, as shown in Figure 2. Preferably, the weld 30 is cold-headed at its raised end 32, as by a cold-heading tool 34, which is moved axially through the hole 26 in the outlet mask 16 and against the raised end 32 while the weld 30 remains plastic. Thus, what had been the raised end 32 of the weld 30 lies flattened against the outer surface 36 of the second sheet 20, as as to provide the weld 30 with an enlarged head 32′. The enlarged head 32′, which seems to lock the weld 30 to marginal portions of the second sheet 20, enhances the resistance of the weld 30 to failing by peeling or delamination, particularly as a major portion of the material of the weld seems to be contributed by the first sheet 18, to which the weld 30 seems to be attached integrally at its opposite end 38.

Significantly, the opposite end 38 of the weld 30 is not raised but lies substantially level with (i.e. level with or depressed very slightly below) the outer surface 40 of the first sheet 18. Thus, the weld 30 is very inconspicuous, especially on the surface 40, which has no raised portion that might snag in handling. The weld 30 may form with an axial hole 42, which is very small in diameter, as shown in Figure 4. If formed, the hole 42 is very inconspicuous, on either surface 36, 40.

An array of transverse welds according to this invention may produce a joint with a breaking strength retaining a substantial fraction (e.g., 80%) of the breaking strength of the base material. Each weld may have a breaking strength approaching the breaking strength of the base material. Such an array can be sequentially or simultaneously formed.

This invention can be advantageously employed in other applications, such as in fencing and in geogrids, in which high breaking strengths are critical. Even where high breaking strengths are not as critical, the unique shape and compact size of a transverse weld according to this invention are advantageous in many other applications. As mentioned above, these applications include welding of layers of thermoplastic film to one another, welding of lids onto containers in a tamper-resistant manner, and sealing of folding cartons, envelopes, and packages.

Products of combustion may be used in place of air. Another gas may be used, such as nitrogen or an inert gas.

## Claims

1. An article of manufacture comprising at least two layers of thermoplastic material (18, 20) welded to one another, characterised by at least one transverse weld (30) being formed entirely of the material of the layers (18, 20) extending substantially through each of the layers (18, 20), and having a columnar shape with an enlarged head (32, 32′) at one end, the other end of the weld being substantially level with an adjacent surface of one of the layers (18, 20).

2. A strap of thermoplastic material having its ends (18, 20) overlapped to form a joint in which the ends (18, 20) are welded to each other, characterised by at least one transverse weld (30) being formed entirely of the material of the strap, extending substantially through each of the ends (18, 20) and having a columnar shape with an enlarged head (32, 32′) at one end, the other end of the weld (30) being substantially level with an adjacent surface of one of the ends (18, 20).

3. An article of manufacture according to claim 1 or a strap according to claim 2, wherein the material of each layer (18, 20) or the strap is polypropylene.

4. An article of manufacture according to claim 1, or a strap according to claim 2, wherein the material of each layer (18, 20) or the strap is crystallizable and wherein the weld (30) is more crystalline than other parts of each layer (18, 20) or the strap.

5. An article of manufacture or a strap according to claim 4, wherein the material of each layer or of the strap (18, 20) is polyethylene terephthalate.

6. An article of manufacture or a strap according to any one of the preceding claims in which a joint between two layers or ends (18, 20) comprises an array of welds (30).

7. A method of welding at least two layers (18, 20) of thermoplastic material to one another comprising the steps of clamping an inlet mask (16) having a hole (24), the layers (18, 20) and an outlet mask (22) having a hole (26) in intimate contact with one another, with the holes (24, 26) in the inlet (16) and outlet (22) masks aligned, and passing a jet of hot gas, for a limited time, successively through the hole (24) in the inlet mask (16), the layers (18, 20) and the hole (26) in the outlet mask (22), the outlet mask dissipating heat rapidly so as to enable a transverse weld (30) to form which welds the layers (18, 20) to one another.

8. A method according to claim 7, comprising the further step of cold-heading the weld (30) so as to form an enlarged head (32') at one end of the weld (30).

_Fig_1_

_Fig_2_

EP 0 327 256 A2

_Fig_3_

_Fig_4_